# EUROPÄISCHE PATENTSCHRIFT

(11) **EP 0 529 489 B1**
(45) Veröffentlichungstag und Bekanntmachung des Hinweises auf die Patenterteilung: **30.10.1996**
(21) Anmeldenummer: 92114108.1
(22) Anmeldetag: 19.08.1992
(51) Int. Cl.: F41J 5/12, G01S 5/16, F41G 3/26

(54) **Verfahren und Vorrichtung zur Schussfehlervermessung beim Schiessen auf ein Luftziel mittels einer Feuerwaffe**
A firing miss-measuring method and installation for firing at a movable airborne target with a gun comprising at leat two barrels
Procédé et installation de tir sur cible aérienne remorquée visant à mesurer la distance des impacts par rapports au but visé

(30) Priorität: 20.08.1991 DE 4127324
(43) Veröffentlichungstag der Anmeldung: 03.03.1993
(73) Patentinhaber: Löwe, Günter, D-57612 Birnbach (DE)
(72) Erfinder: Löwe, Günter, D-57612 Birnbach (DE)
(74) Vertreter: Bauer, Wulf, Dr.

(56) Entgegenhaltungen:
- EP-A- 0 018 332
- EP-A- 0 018 673
- EP-A- 0 088 547
- EP-A- 0 442 112
- DE-A- 2 402 204
- DE-A- 3 002 467
- DE-A- 3 025 161
- GB-A- 2 078 914
- GB-A- 2 080 502
- GB-A- 2 099 964
- US-A- 3 793 481
- US-A- 3 798 795
- US-A- 4 786 167

## Beschreibung

Die Erfindung bezieht sich auf ein Verfahren zum Vermessen der Schußfehler beim Schießen auf ein in der Luft bewegliches Ziel nach dem Oberbegriff des Patentanspruchs 1 sowie auf eine Schußfehler-Vermessungs-Anlage zur Durchführung dieses Verfahrens nach dem Oberbegriff des Patentanspruchs 7.

Dieses Verfahren und diese Schußfehler-Vermessungsvorrichtung sind aus der EP-C-18 673 (DE-C-30 69 857) bekannt. Der Inhalt dieser Patentschrift gehört vollständig zum Inhalt der Offenbarung der vorliegenden Erfindung. Bei dem vorbekannten Verfahren und der vorbekannten Vorrichtung hat es sich jedoch als schwierig erwiesen, bei annähernd gleichzeitigem Schießen von mindestens zwei Waffen mit gleichem Auftrag gegen das gleiche Luftziel die Geschosse einer Waffe bzw., bei Schnellfeuerwaffen mit mehreren Rohren, einem Rohr der Waffe zuzuordnen. Das annähernd gleichzeitige Schießen von zwei Waffen mit gleichem Auftrag gegen das gleiche Ziel würde jedoch die Zieldarstellungszeit erheblich verkürzen.

Im übrigen wird auf die JP-A-1,540,513 und US-A-4 333 106 Schriften verwiesen.

DE-3002462 beschreibt eine Prüfeinrichtung für den Treffehler, um den ein Geschoß das jeweilige Zielobjekt verfehlt. Dabei wird der Abschuß eines Geschosses durch einen Schallsensor akustisch oder durch einen optischen Sensor optisch erfaßt. Mit dem jeweils eingesetzten Sensor wird ein elektrischer Zeitzähler gestartet, dessen Bild in das Bild der Kamera, mit der das Geschoss verfolgt und dargestellt wird, eingeblendet wird.

Hier setzt die Erfindung ein. Sie hat es sich zur Aufgabe gemacht, das vorbekannte Verfahren und die nach diesem Verfahren arbeitende Vorrichtung der eingangs genannten Art dahingehend weiterzuentwickeln und zu verbessern, daß es ermöglicht wird, bei jedem Geschoß, das von den TV-Kameras erfaßt wird, dasjenige Rohr anzugeben, aus dem das Geschoß abgefeuert wurde.

Verfahrensmäßig wird diese Aufgabe dadurch gelöst, daß vor jedem Rohr ein Sensor angeordnet wird, der ein das Rohr verlassendes Geschoß berührungsfrei erfaßt und ein elektrisches Signal über den Zeitpunkt des Geschoßdurchlaufs erzeugt und an den Prozeßrechner liefert. Vorrichtungsmäßig wird diese Aufgabe gelöst durch einen vor der Rohrmündung angeordneten, ein Geschoß berührungsfrei erfassenden Sensor, der über eine elektrische Zuleitung mit dem Prozeßrechner verbunden ist.

Erfindungsgemäß wird also dem Prozeßrechner jeweils bereits ein Signal im Moment des Geschoßabganges (exakt: des Geschoßdurchlaufs am Sensor) gegeben. Aus der bekannten Zielentfernung und mit Hilfe der sonstigen, bekannten balistischen Daten, beispielsweise Geschoßanfangsgeschwindigkeit vₒ, Windgeschwindigkeit, Wirkung der Erdanziehung etc. kann damit der Zeitpunkt errechnet werden, an dem das erfaßte Geschoß durch die Zielebene bzw. eine senkrecht zur Verbindungslinie einer TV-Kamera zum Ziel stehende Ebene hindurchtritt. Bei annähernd gleichzeitigem Schießen aus mindestens zwei Rohren kann zudem noch über die Geschoßflugbahn im Bereich des Zieles zwischen den Rohren unterschieden werden, aus denen die mehr oder weniger gleichzeitig abgefeuerten Geschosse stammen. Geht ein Geschoß soweit am Ziel vorbei, daß es von den TV-Kameras nicht erfaßt wird, so wird keine Messung durchgeführt, der Rechner erwartet zu einem vorgegebenen Zeitpunkt ein Geschoß in der Zielebene, wird dieses jedoch nicht aufgefunden, so erfolgt keine Vermessung, jedoch eine Anzeige, daß das betreffende Geschoß nicht aufgefunden werden konnte.

Bei der erfindungsgemäßen Vorrichtung gibt der Prozeßrechner für jedes einzelne Geschoß, das mit einem Sensor erfaßt wurde, einen zeitlichen Erwartungswert, anders ausgedrückt ein Zeittor, vor, innerhalb welchen Wertes das Geschoß sich in der Zielebene befinden müßte, für den Fall, daß innerhalb eines Zeittores zwei Geschosse die Zielebene passieren, wird aus der ohnehin errechneten, nämlich für die Berechnung der kürzesten Entfernung des Geschosses von dem Flugziel benötigten Flugbahn auf das Rohr geschlossen, aus dem ein bestimmtes Geschoß abgefeuert würde. Hierbei macht man sich im Prozeßrechner die Tatsache zugrunde, daß aus jedem Rohr jeweils mehrere Feuerstöße abgegeben werden und damit die charakteristische Flugbahn der Geschosse eines Rohres aus vorhergehenden oder nachfolgenden Geschossen ermittelt werden kann.

Schließlich erleichtert sich die Auswertung im Prozeßrechner noch dadurch, daß die typischerweise eingesetzten Schnellfeuerwaffen jeweils eine typische, für die einzelne Feuerwaffe individuelle Geschoßfolge (fingerprint) aufweisen. Die Geschoßfolge ist entweder in einem Zwischenrechner, der zwischen Sensor und Prozeßrechner angeordnet ist (und Teil des Prozeßrechners sein kann) eingespeichert, oder sie wird jeweils über den dem Rohr zugeordneten Sensor neu erfaßt. Sobald ein bestimmtes Rohr zu feuern beginnt, also der diesem Rohr zugeordnete Sensor das erste Geschoß erfaßt, kann der Prozeßrechner angeben, wann die nachfolgenden Geschosse dieses Rohres zu erwarten sind. Als Nebeneffekt können mit der erfindungsgemäßen Vorrichtung für ein bestimmtes Rohr sogar Ermüdungserscheinungen oder andere Abweichungen, die die Geschoßfrequenz beeinflussen, erfaßt werden.

Unter dem Begriff Sensor werden allgemein Einrichtungen zur optischen, elektrischen und/oder magnetischen Erfassung eines Geschosses verstanden, die berührungslos arbeiten. Besonders geeignete Sensoren in diesem Sinne für die Durchführung der Erfindung sind vor der Mündung angeordnete Induktionsspulen, die von den Geschossen durchflogen werden. Sie können Passiv arbeiten, also den induzierten Stromstoß beim Durchlauf eines Geschosses erfassen. Vorzugsweise sind sie jedoch Bestandteil eines Oszillators, also erregte Induktionsspulen, deren Induktivität sich während des Geschoßdurchlaufs ändert, weil sich während des Geschoßdurchlaufs die Permeabilität des Materials innerhalb der Induktionsspule ändert. Schließlich können auch optische Verfahren, beispielsweise Lichtschranken, eingesetzt werden.

Als sehr vorteilhaft hat es sich erwiesen, jedem Rohr nicht nur einen Sensor dieser Art, sondern einen weiteren, in genau bestimmtem Abstand vom ersten angeordneten Sensor vorzusehen. Auch sein Signal wird dem Prozeßrechner zugeleitet. Dieser kann aus dem zeitlichen Abstand des Durchtrittes durch die beiden Sensoren und dem bekannten räumlichen Abstand der beiden Sensoren die jeweilige Geschoßanfangsgeschwindigkeit vₒ ermitteln. Mit Hilfe dieses Wertes kann noch präziser der jeweilige Zeitpunkt errechnet werden, an dem das erfaßte Geschoß durch die Zielebene hindurchtreten müßte.

Die erfindungsgemäßen Sensoren ermöglichen es schließlich, die gesamte Vermessungs-Anlage immer nur dann zu aktivieren, wenn ein Sensor einen Geschoßdurchlauf erfaßt hat. Die Anlage bleibt dann zumindest solange aktiviert, bis der Durchlauf des zugehörigen Geschosses durch die Zielebene auf jeden Fall erfolgt sein müßte, bis also das Zeittor überschritten ist und/oder die Zeitdauer vergangen ist, innerhalb welcher dasselbe Rohr üblicherweise den nächsten Schuß abgibt. Außerhalb dieses Zeitraumes bzw. dieser Zeiträume befindet sich die Vermessungs-Anlage in einem Ruhezustand (sleeping mode). Im Ruhezustand ist der Prozeßrechner im wesentlichen inaktiv, weiterhin können einzelne Geräte, beispielsweise das Entfernungsmeßgerät, das Zielverfolgungsgerät abgeschaltet sein, schließlich ist es möglich, die TV-Kameras abzuschalten oder gar zu schützen, beispielsweise gegen unbeabsichtigten Einfall von Sonnenlicht.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das zugleich der Erläuterung des erfindungsgemäßen Verfahrens dient. Es wird in der Zeichnung näher erläutert, in dieser zeigen:
- Fig. 1: eine perspektivische Darstellung einer Schußfehler-Vermessungs-Anlage nach der Erfindung,
- Fig. 2: eine perspektivische Darstellung, schematische Darstellung einer Rohrmündung mit davor angeordneten Sensoren,
- Fig. 3: ein Zeitdiagramm für die bei dem erfindungsgemäßen Verfahren erzeugten Impulse im Zusammenhang mit den Sensoren,
- Fig. 4: ein Zeitdiagramm entsprechend Fig. 3 für ein Geschoß, daß gleichzeitig mit dem Geschoß nach Fig. 3 in der Zielebene eintrifft und
- Fig. 5: ein Zeitdiagramm für die von dem Sensor eines Rohrs gelieferten Impulse mit zugehörigen Codesignal für eine Schußfolge von vier Schüssen.

An den Endpunkten einer vermessenen Basis sind im Abstand d voneinander zwei Richt- und Aufnahmegeräte A und B angeordnet. Sie enthalten jeweils einen optronischen Sensor, der im Bereich des sichtbaren Lichtes und/oder im IR-Bereich arbeitet, hier kurz Fernsehkamera, auch TV-Kamera, genannt, einen Analog-Digital-Wandler und ein Zielverfolgungsgerät, z.B. ein Infrarot-Zielverfolgungsgerät. Als Zielverfolgungsgerät kann auch der optronische Sensor (Fernsehkamera) verwandt werden. Weiterhin ist im Richt- und Aufnahmegerät A zusätzlich noch ein Laser-Entfernungsmesser angeordnet.

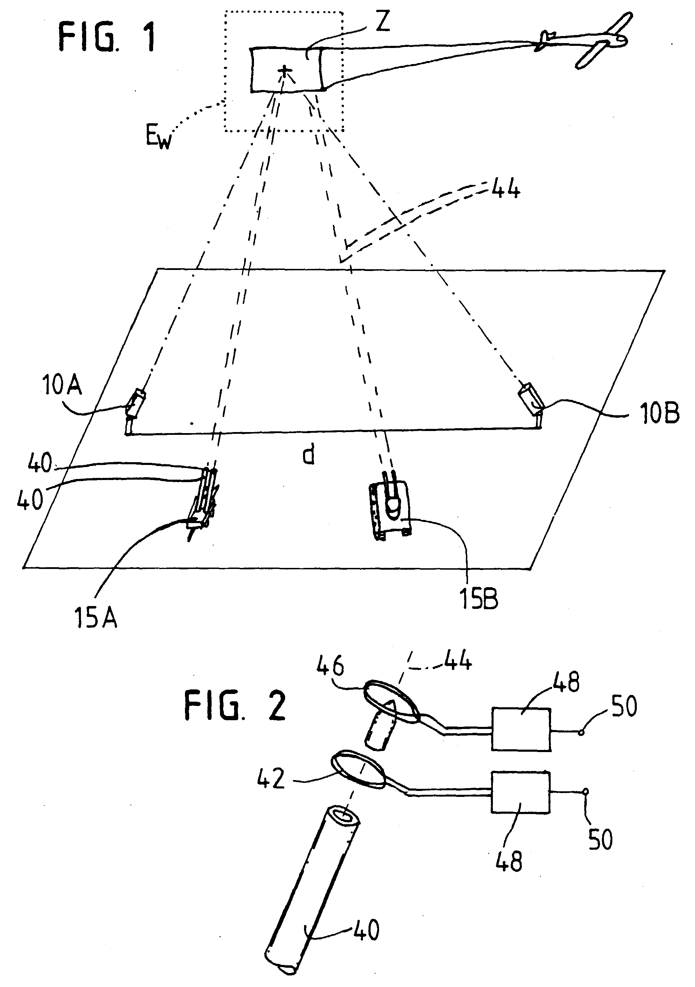

Die optischen Achsen der Fernsehkameras 10A bzw. 10B stehen immer parallel zur optischen Achse des zugehörigen Infrarot-Zielverfolgungsgerätes bzw. des Laser-Entfernungsmessers. Das zu verfolgende Ziel Z liegt in Form einer Schleppscheibe vor, es hat eine Infrarotquelle (markiert durch Zeichen +) im Frequenzbereich der Zielverfolgungsgeräte. Andere Ausbildungen sind möglich, z.B. Ziel ist ein Flugkörper. Mit Hilfe der Zielverfolgungsgeräte werden die beiden TV-Kameras so gerichtet, daß sich das Ziel Z immer im Mittelpunkt des Bildes befindet. In Fig. 1 ist dies durch strichpunktierte Linien angedeutet.

Zwei Feuerwaffen 15A und 15B mit jeweils zwei Rohren 40 sind auf das Ziel Z gerichtet und versuchen, dieses zu treffen. Die Sichtziellinien sind für jedes Rohr gestrichelt eingezeichnet. Für die Waffe 15A ist punktiert die zugehörige Zielebene E_{w} eingezeichnet. Sie verläuft senkrecht zur Sichtziellinie. Für die Feuerwaffe 15B gilt eine andere Zielebene.

Wie in der EP-C-18 673 beschrieben, werden die von den Feuerwaffen 15A und 15B abgefeuerten Geschosse G (Fig. 2), sobald sie auf den Speicherplatten der TV-Kameras erscheinen, erfaßt und numerisch in den Prozeßrechner eingegeben. Die Einzelheiten der Auswertung ergeben sich aus der genannten Patentschrift.

Vor jedem Rohr 40 ist, wie Fig. 2 zeigt, mindestens ein Sensor 42 angeordnet, der im Ausführungsbeispiel nach Fig. 2 als Induktionsspule ausgebildet ist. Zur Vereinfachung der Darstellung hat diese lediglich zwei Windungen. Sie ist konzentrisch zur Rohrachse 44 angeordnet und hat einen so großen Innendurchmesser, daß die Geschosse G berührungsfrei durch die Induktionsspule hindurch fliegen können, wie Fig. 2 zeigt. Im festen Abstand 1, beispielsweise im Abstand 1 = 10 cm, ist ein zweiter Sensor 46 gleichachsig zum ersten Sensor 42 angeordnet, er ist baugleich mit dem ersten Sensor 42. Beide Sensoren sind jeweils an einen Oszillator 48 angeschlossen. Sobald, wie in Fig. 2 dargestellt, ein Geschoß durch eine Induktionsspule hindurchfliegt, verändert sich deren Induktivität. Dies hat die Folge, daß sich die Frequenz des zugehörigen Oszillators 48 ändert. Über eine geeignete, ansich bekannte Diskriminatorschaltung wird bei einer bestimmten Verstimmung ein Ausgangssignal abgegeben, das am Ausgang 50 erscheint. Dieser Ausgang 50 ist mit dem Prozeßrechner verbunden.

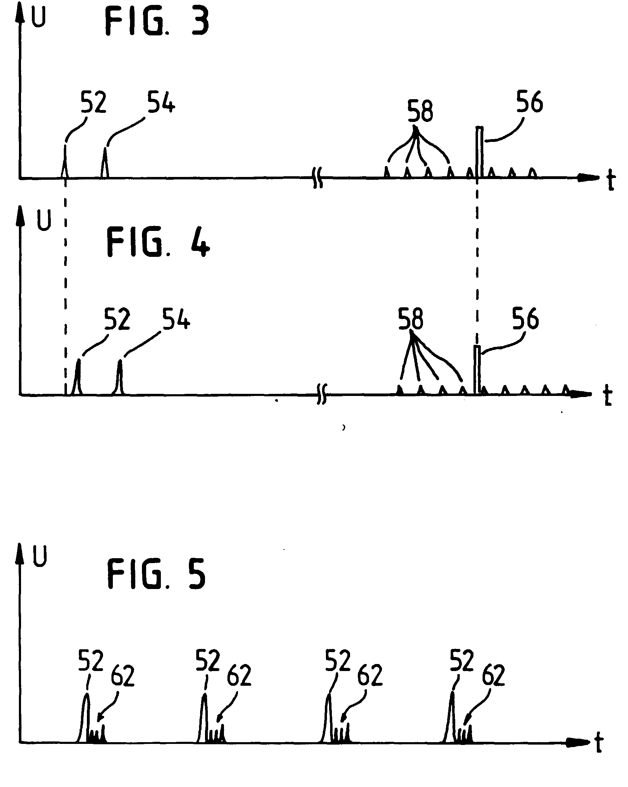

Die nach Durchgang eines Geschosses G eines Rohres 40 durch die beiden Sensoren 42, 46 an den jeweiligen Ausgängen 50 anliegenden Impulse sind in den Fig. 3 und 4 mit 52 und 55 bezeichnet. Aus ihrem zeitlichen Abstand, der bei 1 = 10 cm beispielsweise im Bereich von 0,1 ms liegt, kann die Geschoßanfangsgeschwindigkeit vₒ errechnet werden.

Sobald ein Impuls 52 des ersten Sensors 42 dem Prozeßrechner zugeleitet wird, errechnet dieser mit Hilfe der bekannten oder gemessenen Geschoßanfangsgeschwindigkeit vₒ, der gemessenen oder errechneten Zielentfernung des Geschützes 15 A vom Ziel Z und eventuell weiteren Korrekturwerten, wie beispielsweise Windgeschwindigkeit, Richtung der Erdanziehung usw. den Zeitpunkt, an dem das erfaßte Geschoß G die Zielebene E_{w} durchfliegen wird. Der entsprechende Wert ist als Erwartungswert bzw. Zeittor 56 in den Figuren 3 und 4 eingezeichnet.

Sobald das Geschoß G von den TV-Kameras erfaßt wird, also auf deren Speicherplatten erscheint, erfolgt eine Auswertung des jeweiligen Ortes des Geschosses durch den Prozeßrechner. Die TV-Kameras erzeugen eine gewisse Anzahl von Halbbildern pro Sekunde, beispielsweise fünfzig Halbbilder pro Sekunde. In Abhängigkeit von dieser Bildfrequenz erfolgt aus der Bildauswertung die Berechnung des zum jeweiligen Zeitpunkt vorliegenden Ortes des Geschosses in drei Dimensionen. In den Figuren 3 und 4 sind die für den Ort des Geschosses G zu einem Zeitpunkt charakteristischen Signale durch Impulse 58 dargestellt. Aus beiden Figuren Fig. 3 und 4 ist zu ersehen, daß die im wesentlichen mit gleichen Zeitabständen anfallenden Impulse 58 normalerweise nicht exakt für den Zeitpunkt vorliegen, bei dem das Geschoß G durch die Zielebene E_{w} fliegt. Vielmehr wird aus den Signalen 58 eine Geschoßbahn errechnet und im Prozeßrechner ermittelt, welchen Ort das Geschoß zur Zeit des Zeittores 56 hat.

Erfindungsgemäß wird pro registriertem Geschoß, also pro Impuls 52, den ein erster Sensor 42 abgegeben hat, ein Zeittor 56 gebildet. Das Geschoß G, das während des Zeittors 56 die zugehörige Zielebene E_{w} durchfliegt, wird dem Rohr 40 zugeordnet, dessen erster Sensor 42 den zugehörigen Impuls 52 abgegeben hat. Dadurch ist eine Zuordnung jedes Geschosses G zum Rohr 40, das das Geschoß G abgefeuert hat, möglich.

Ein Problem tritt jedoch auf, wenn die Zeittore 56 zweier unterschiedlicher Geschosse überlappen. Dieser Fall wird im folgenden durch Vergleich der Figuren 3 und 4 erläutert. Fig. 3 zeigt die Impulsfolge für ein erstes Geschoß, Fig. 4 für ein zweites, aus einem anderen Rohr abgefeuertes Geschoß G. Ein Vergleich der beiden Figuren zeigt, daß es nicht notwendigerweise auf den gleichen Abschußzeitpunkt des Geschosses ankommt. Vielmehr ist das Geschoß G nach Fig. 3 etwas vor dem Geschoß G nach Fig. 4 abgefeuert worden, denn der Impuls 52 nach Fig. 3 liegt zeitlich etwas früher als der entsprechende Impuls 52 für das Geschoß G nach Fig. 4. Entscheidend ist für die Auswertung lediglich, daß im gegebenen Fall die Zeittore 56 überlappen, was durch die gestrichelte Linie angedeutet ist. In diesem Fall ist allein aus der Auswertung des Zeitpunktes des Durchlaufs des Geschosses G durch die jeweilige Zielebene keine eindeutige Zuordnung zum abfeuernden Rohr 40 möglich. Eine Zuordnung wird aber dadurch erreicht, daß insgesamt aus den Impulsen 48 für jedes einzelne Geschoß eine Flugbahn errechnet wird, diese Flugbahn wiederum kann verglichen werden mit den Flugbahnen vorausgegangener oder nachfolgender Geschosse desselben Rohres 40. Aus dem Unterschied der Flugbahnen kann der Prozeßrechner eine eindeutige Zuordnung des Geschosses zum Rohr treffen.

Da die Erfassung eines Geschosses mit Hilfe der Sensoren 42, 46 sehr präzise durchgeführt werden kann, kann das Zeittor 56 einerseits sehr präzise angegeben werden, andererseits sehr kurz gewählt werden. Dadurch ist es in der Praxis möglich, auch bei aus Waffen mit mehreren Rohren abgefeuerten Geschossen jedes Geschoß demjenigen Rohr zuzuordnen, aus dem es abgefeuert wurde. Schnellfeuerwaffen mit mehreren Rohren haben eine typische, unverwechselbare Geschoßfolge (fingerprint) für jeweils einen bestimmten Feuerstoß. Der fingerprint wird jeweils erfaßt aufgrund der Zeitfolge der Impulse 52. Dadurch wird folgende, vereinfachte Auswertung möglich: Nach erfolgter Bildauswertung hat der Rechner einerseits die Zeiten des Geschoßdurchlaufs durch die jeweilige Zielebene und den zugehörigen, kürzesten Abstand des Geschosses G vom Ziel gespeichert. Andererseits ist im Rechner der fingerprint, also die Zeitfolge der Impulse 52, abgespeichert. Alle Schüsse, die in der Zeitfolge des fingerprints eines Rohres anfallen, werden diesem zugeordnet, entsprechend wird mit den anderen Rohren vorgegangen. Als zusätzliches Unterscheidungsmerkmal wird für jedes Rohr 40 den Impulsen 52 ein rohreigentümlicher Code 62 mitgegeben. Dieser Code 62 wird durch die Impulse 52 ausgelöst und folgt ihnen unmittelbar (Fig. 5). Diese Codierung bringt den Vorteil, daß zeitlich dicht beieinander liegende Schüsse diskriminiert werden können.

Erfindungsgemäß wird somit jeder einzelne Schuß, also jedes einzelne Geschoß G, verfolgt, gewissermaßen "buchhalterisch", erfaßt. Im Prozeßrechner wird daher für jedes Rohr eine Zeittor-Bank aufgebaut, die aus dem "Fingerprint" der Impulse 52 und dem rohreigentümliche Code 62 besteht. Geschosse G, die nicht in den Erfassungsbereich der TV-Kameras gelangen, werden als solche registriert, das für sie gebildete Zeittor 56 wird gelöscht, sobald kein Ereignis in das Zeittor 56 hineinfällt. Bei zwei Geschossen mit überlappenden Zeittoren 56 wird auch noch berücksichtigt, welche Lage die zuvor und danach abgefeuerten Geschosse aus den jeweiligen Rohren haben, liegen beispielsweise alle Geschosse eines Rohres außerhalb der Erfassungsbereiche der beiden TV-Kameras, so wird auch für das "gleichzeitige" Geschoß dieses Rohres eine Lage außerhalb des Erfassungsbereichs angenommen und das andere (gleichzeitige) Geschoß dem anderen Rohr zugeordnet. Sind beide gleichzeitigen Geschosse außerhalb der Erfassungsbereiche, ist eine Unterscheidung nicht notwendig.

Auf dem vom Rechner erstellten und mittels einer geeigneten Ausgabeeinheit, beispielsweise einem Plotter oder einem Monitor erstellten Trefferbild, wird jeweils auch die Anzahl der Geschosse angegeben, die mittels der TV-Kameras nicht erfaßbar waren. Weiterhin wird eine Zeitfolge der Geschosse, beispielsweise Durchnumerierung jeder Geschoßgarbe, angegeben.

Läßt die mittels der beiden Sensoren 42, 46 ermittelte Geschoßanfangsgeschwindigkeit vₒ nach oder steigt sie an, wird vom Rechner eine entsprechende Meldung abgegeben, es kann dann eine Überprüfung des Rohres erfolgen. Ebenso wird eine Meldung herausgegeben, wenn die Geschoßfolgefrequenz von einem Frequenzbereich, der für das Rohr typisch ist, abweicht.

Anhand von Fig. 5 wird eine Verbesserung des bisher beschriebenen Verfahrens diskutiert: Den von den Sensoren 42, 44 gelieferten Impulsen 52, 54 wird jeweils ein charakteristischer, dem zugehörigen Rohr 40 eigentümlicher Code 62 in Form eines Codesignals zugefügt. Diese Hinzufügung kann bereits im Sensor 42, 46 selbst erfolgen, durch einen dort angeordneten Signalgeber oder durch die spezielle Ausbildung des Sensors, beispielsweise zwei Spulen entsprechend Fig. 2 für das erste Rohr 40, drei Spulen entsprechend Fig. 2 für das zweite Rohr usw. Die Hinzufügung des Codes 62 kann aber auch im Prozeßrechner selbst erfolgen. Der Prozeßrechner ist hardwaremäßig mit den Sensoren 42, 46 verdrahtet (eventuell über Funkstrecke). Als sehr vorteilhaft hat es sich erwiesen, den Code 62 zusätzlich für jeden Schuß noch geringfügig zu ändern, also jeden Schuß praktisch mitzuzählen. Dabei wird dem ersten Schuß von einem Feuerstoß ein rohrtypischer Code 62 zugeordnet, der beim zweiten Schuß geringfügig geändert wird usw.

Durch die Zuordnung eines Codes 62 wird die Verarbeitung der Impulse 52, 54 im Prozeßrechner vereinfacht. Zugleich kann bei im Sensor angeordneten Codegebern der korrekte Anschluß der Sensoren 42, 46 geprüft werden.

## Patentansprüche

1. Verfahren zum Vermessen der Schußfehler beim Schießen auf ein in der Luft bewegliches Ziel (Z) mittels einer Feuerwaffe (15) und zum Aufzeichnen der gemessenen Schußfehler, bei dem die Höhen- und Seitenwinkel des Ziels (Z) gegenüber sowie die Entfernung des Ziels (Z) von einem Bezugspunkt laufend gemessen und die Daten dieser Messungen in einem Prozeßrechner gespeichert werden, wobei zwei im Abstand d voneinander angeordnete TV-Kameras auf die Höhen- und Seitenwinkel eingestellt und dem Ziel (Z) so nachgeführt werden, daß sich das Ziel (Z) immer im Mittelpunkt des Bildes auf den Speicherplatten der TV-Kameras befindet, und aus der unterschiedlichen Lage der Bildpunkte des Ziels (Z) und der Geschosse (G) in den Videobildern der beiden TV-Kameras unter Berücksichtigung der Abstände des Ziels (Z) von den beiden TV-Kameras die zweidimensionalen Abstände der Geschoßprojektionen auf die jeweilige, durch das Ziel (Z) gehende Bildebene vom Ziel (Z) ermittelt und dem Rechner (14) zugeleitet werden, der hieraus unter Berücksichtigung der unterschiedlichen Kamerastandorte den Ort des Geschosses (G) berechnet, an dem es sich in dem Zeitpunkt befindet, an dem sich das Ziel an der Stelle des theoretischen Treffpunktes befindet, auf den die Feuerwaffe (15) im Zeitpunkt des Abfeuerns hätte gerichtet sein müssen, hiermit und aus dem gemessenen Ort des Ziels (Z), an dem sich dieses zum selben Zeitpunkt befindet, den Abstand der Projektionen auf die senkrecht zur Verbindungslinie von einer TV-Kamera zum Ziel (Z) stehende Ebene, in der sich jeweils das Ziel (Z) befindet, des Geschosses (G) im genannten Zeitpunkt vom Ziel (Z) berechnet und hieraus die Abstände des Geschosses (G) vom Ziel (Z) in einer senkrecht zur Verbindungslinie von Feuerwaffe (15) zum Ziel (Z) befindlichen Zielebene (E_{w}) berechnet und anzeigt, dadurch gekennzeichnet, daß vor jedem Rohr ein Sensor (42, 46) angeordnet wird, der ein das Rohr (40) verlassendes Geschoß (G) berührungsfrei erfaßt und ein elektrisches Signal über den Zeitpunkt des Geschoßdurchlaufs erzeugt und an den Prozeßrechner liefert, der hieraus ein Zeittor (56) für den Durchlauf des Geschosses durch die Zielebene (E_{w}) bildet.

2. Verfahren nach Anspruch 1, dadurch gekennzeichnet, daß jedem Rohr zwei Sensoren, die in einem festen Abstand 1 voneinander angeordnet sind, zugeordnet sind und daß aus dem zeitlichen Abstand der von den Sensoren (42, 46) gelieferten Impulse (52, 54) die Geschoßanfangsgeschwindigkeit vₒ errechnet wird.

3. Verfahren nach Anspruch 1 oder 2, dadurch gekennzeichnet, daß bei überlappenden Zeittoren (56) zweier Geschosse (G) zur Identifizierung des Rohres (40), aus dem das jeweilige Gechoß abgefeuert wurde, zusätzlich die Geschoßbahnen der zuvor und/oder danach aus demselben Rohr (40) abgefeuerten Geschosse (G) berücksichtigt werden.

4. Verfahren nach einem der Ansprüche 1 bis 3, dadurch gekennzeichnet, daß den Impulsen (52, 54) ein dem zugehörigen Rohr (40) eigentümlicher Code (62) zugeordnet wird.

5. Verfahren nach einem der Ansprüche 1 bis 4, dadurch gekennzeichnet, daß der Rechner Geschosse (G), die nicht von den TV-Kameras erfaßt werden konnten, erfaßt und für sie einen Ausdruck erstellt.

6. Verfahren nach einem der Ansprüche 1 bis 5, dadurch gekennzeichnet, daß der Rechner bei Abweichungen von der typischen Geschoßfolgefrequenz und/oder bei Abweichungen von der normalen Geschoßanfangsgeschwindigkeit vₒ eine Fehlermeldung liefert.

7. Schußfehler-Vermessungs-Anlage zur Durchführung des Verfahrens nach einem der Ansprüche 1 bis 5, mit zwei TV-Kameras zum Verfolgen des beweglichen Ziels (Z) in der Luft, mit einem Höhen- und Seiten- Codiergerät zum Messen der Lage der Sichtziellinie, mit einem Entfernungsmeßgerät zum Bestimmen der Entfernung des Ziels vom Bezugspunkt, mit einem Prozeßrechner, der mit dem Codiergerät und dem Entfernungsmeßgerät verbunden ist und so ausgebildet ist, daß er durch ein Programm steuerbar ist, durch welches aus den aus der unterschiedlichen Lage der Bildpunkte des Ziels und der Geschosse (G) in den Videobildern der beiden TV-Kameras unter Berücksichtigung der Abstände des Ziels von den beiden TV-Kameras die zweidimensionalen Abstände der Geschoßprojektionen auf die jeweilige, durch das Ziel gehende Ebene vom Ziel ermittelten und dem Rechner zugeleiteten Daten die Abstände in der senkrecht zur Verbindungslinie von Feuerwaffe (15) zum Ziel (Z) befindlichen Zielebene (E_{W}) berechnet werden, dadurch gekennzeichnet, daß vor der Rohrmündung jedes Rohres (40) ein Sensor (42) angeordnet ist, der ein elektrisches Signal über den Zeitpunkt des Durchlaufs des Geschosses erzeugt und über eine elektrische Zuleitung mit dem Prozeßrechner verbunden ist, und daß im Prozeßrechner eine Einrichtung zur Bildung eines Zeittores (56) für den Durchlauf des Geschosses durch die Zielebene (E_{W}) vorgesehen ist, die durch das elektrische Signal gestartet wird.

8. Vorrichtung nach Anspruch 7, dadurch gekennzeichnet, daß vor jeder Rohrmündung zwei Sensoren (42, 46) im festen Abstand 1 voneinander angeordnet sind.

## Claims

1. Method of measuring shooting errors during firing at a moving airborne target (Z) by a gun (15), and for scoring the measured shooting errors, wherein elevation angle and azimuth angle as well as the distance of the target (Z) in relation to a reference point are continuously measured, the data of the measurement results being stored in a process computer (14), whereby two tv-cameras are arranged in a distance (d), positioned in direction of elevation angle and azimuth angle of the tracked target (Z), which by this way will continuously be located in the centre of the storage target of the tv-cameras and the twodimensional distances of the projections of the projectiles (G) on the image plane through the target (Z) are computed by the different locations of the image points of the target (Z) and the projectiles (G) in the video images of both tv-cameras, whereby the distances of the target (Z) from the tv-cameras will be taken into account and fed into the computer (14), which computes the momentary location of the projectile (G), when the target is penetrating the theoretical hitting point, on which the gun (15) should have been trained at firing moment, taking into consideration the different positions of the tv-cameras, computes the aforementioned data together with the measured location at present time of the target, computes the distance of projection of the projectile on the plane perpendicular to the straight line from tv-camera to the target (Z) in its actual position, hereby computes and indicates the distances of the projectile (G) form the target (Z) in a target plane (E_{W}), which is perpendicular to the straight line from the gun (15) to the target (Z) characterised in that a sensor (42, 46) is arranged before each barrel, which without contacting it senses a projectile (G) leaving the barrel (40), produces an electric signal during the moment of the passage of the projectile and delivers it to the computer, which computer establishes a time gate (56) for the passage of the projectile through the target plane (E_{W}).

2. Method according to claim 1, characterised in that two sensors arranged in a fixed mutual distance 1 are attributed to each barrel and that the initial velocity vₒ of the projectile is calculated from the difference in time of the impulses (52, 54) delivered by the sensors.

3. Method according to claim 1 or 2, characterised in that to identify the barrel, from which the respective projectile has been fired, in case of two overlapping time gates (56) of two projectiles (G), the trajectories of projectiles (G) are taken into consideration, too, which have been fired before and/or after from the same barrel (40).

4. Method according to one of the claims 1 to 3, characterized in that a characteristic code (62) is attributed to the impulses (52, 54) of the pertinent barrel (40).

5. Method according to one of the claims 1 to 4, characterised in that the computer records projectiles (G), which could not be traced by the tv-cameras, and produces a print-out for them.

6. Method according to one of the claims 1 to 5, characterised in that the computer issues an error output if there are deviations of the typical frequency of the succession of shots and/or of the regular initial velocity vₒ of the projectiles.

7. Shooting error measurement device for carrying out the method of one of the claims 1 to 5, with two tv-cameras for tracking the moving airborne target (Z), with an azimuth-/elevation-encoder for measuring the position of the line-of-sight, with a rangefinder for determining the distance between the target and the reference point, with a process computer, operatively connected with the encoder and the rangefinder and controllable by a programme computing the distances in the target plane (E_{W}), which is perpendicular to the straight line from gun to target (Z); the computation is resulting from the data taken and delivered to the computer of the twodimensional distances of the projections of the projectiles (G) on the actual plane through the target (Z), considering the different locations of the image points of the target (Z) and the projectiles (G) in the video pictures of both tv-cameras, characterised in that a sensor (42) is arranged before the muzzle of each barrel (40), which sensor produces an electrical signal for the moment of the passage of the projectile and is linked by an electric line to the computer, and in that a device for producing a time gate (56) for the passage of the projectile through the target plane (E_{W}) is provided in the computer, which device is started by the said electrical signal.

8. Device according to claim 7, characterised in that two sensors (42, 46) arranged in a fixed mutual distance 1 are mounted in front of each muzzle.

## Revendications

1. Procédé pour mesurer des erreurs de tir lors de l'engagement d'un objectif aérien mobile (Z) par une arme à feu (15) et pour enregistrer les erreurs de tir ainsi mesurées: ce procédé qui consiste à mesurer de manière contin que sa distance par rapport à un point de référence et à mémoriser les valeurs de mesure ainsi obtenues dans un calculateur, procédé par lequel deux caméras de télévision (10 A, 10 B), disposées à une distance d l'une de l'autre et pointées sur l'objectif selon les angles de site et de gisement sont amenées à poursuivre l'objectif (Z) de telle manière que l'objectif (Z) figure toujours au centre de l'image créée sur les plaques de mémoire des caméras de télévision; et tenant compte de la position différente, sur l'image vidéo des deux caméras de télévision, des point-image représentant l'objectif (Z) et les projectiles (G), tenant compte également des distances entre l'objectif (Z) et les deux caméras de télévision, on détermine les écarts bidimensionnels entre, d'une part, les projections de projectile sur les plans-image passant par l'objectif (Z) et, d'autre part, l'objectif (Z) lui même, et on les introduit dans le calculateur (14), qui, utilisant ces valeurs et tenant compte de la position différente des deux caméras, calcule la position du projectile (G) que celui-ci occupe à l'instant ou l'objectif (Z) se trouve à l'endroit qui correspond au point d'impact théorique, c'est à dire au point sur lequel l'arme à feu (15) aurait dû être pointée à l'instant du tir; utilisant cette dernière valeur et tenant compte de la position mesurée de l'objectif (Z), occupée par celui-ci au même instant, calcule pour cet instant l'écart entre, d'une part, les projections du projectile sur un plan passant par l'objectif (Z) et perpendiculaire à l'axe reliant une caméra de télévision et, d'autre part, l'objectif (Z) lui même; utilisant ces dernières valeurs, calcule et affiche les écarts entre le projectile (G) et l'objectif (Z) dans un plan (E_{W}) passant par l'objectif et perpendiculaire à l'axe reliant l'arme à feu (15) et l'objectif (Z), caractérisé en ce qu'un détecteur (42, 46) est arrangé devant chaque canon, qui recense chaque projectile (G) quittant le canon (40) sans le contacter et qui produit un signal électrique pour le moment du passage de projectile et qui le fournit au calculateur, qui en forme un laps de temps (56) pour le passage du projectile en travers le plan (E_{W}) passant par l'objectif.

2. Procédé selon la revendication 1, caractérisé en ce que deux détecteurs montés en écartement 1 de l'un à l'autre sont attribué à chaque canon et en ce que la vitesse initiale vₒ est calculé en utilisant l'intervalle des deux impulsions (52, 54) fournies par les détecteurs (42, 46).

3. Procédé selon la revendication 1 ou 2, caractérisé en ce que, pour identifier le canon duquel un projectile actuel à été tiré, on prend en outre en considération les traces de projectiles tirées avant et/ou après du même canon (40) si les laps de temps (56) de deux projectile (G) se recouvrent.

4. Procédé selon l'une des revendications 1 à 3, caractérisé en ce qu'un code (62) caractéristique est attribué aux impulsions (52, 54) de chaque canon (40).

5. Procédé selon l'une des revendications 1 à 4, caractérisé en ce que le calculateur traite des projectiles (G), qui ne sont pas saisi par les caméras de télévision, et produit un imprimé d'elles.

6. Procédé selon l'une des revendications 1 à 5, caractérisé en ce que le calculateur produit un message d'erreur en cas de déviations de la fréquence typique de séquence des tirs et/ou en cas de déviations de la vitesse initiale normale vₒ.

7. Installation de mesure de ces erreurs de tir pour la mise en oeuvre de ce procédé selon l'une des revendication 1 à 5, avec deux caméras de télévision qui doivent poursuivre l'objectif mobile (Z) dans l'air, un codeur de site et de gisement qui doit mesurer l'orientation de la ligne de visée, un télémètre qui doit déterminer la distance entre l'objectif et le point de référence, un calculateur qui est relié avec le codeur et le télémètre et qui est capable de traiter un programme calculant les écarts sur un plan (E_{W}) passant par l'objectif (Z) et perpendiculaire à l'axe reliant l'arme à feu (15) et l'objectif (Z), le calcul se fait à l'aide des données, recensées et introduites dans le calculateur, relatives aux écarts bidimensionnels entre, d'une part, les projections de projectile sur le plan, passant par l'objectif (Z) et, d'autre part l'objectif (Z) lui même, et il tient compte de la position différente des points-image représentant l'objectif (Z) et les projectiles (G) dans les images vidéo des deux caméras de télévision caractérisé en ce qu'un détecteur (42) est arrangé avant l'orifice de chaque canon (40), qui produit un signal électrique pou le moment du passage de projectile et est relié par un fie électrique avec le calculateur et en ce que un dispositif de former un laps de temps (56) pour le passage du projectile en travers le plan (E_{W}) passant par l'objectif est mis en marche dans le calculateur.

8. Installation selon la revendication 7, caractérise en ce que deux détecteurs (42, 46) montés en écartement 1 de l'un à l'autre sont arrangés devant chaque orifice.
